Europäisches Patentamt

European Patent Office

Office européen des brevets

(19)

(11) Publication number: **0 002 861**
**B1**

(12) **EUROPEAN PATENT SPECIFICATION**

(45) Date of publication of patent specification: **21.04.82**

(51) Int. Cl.³: **C 08 F 14/06**

(21) Application number: **78200369.3**

(22) Date of filing: **14.12.78**

(54) **Process of preparing vinyl chloride polymers by suspension polymerization and polymers so obtained.**

(30) Priority: **19.12.77 NL 7714034**

(43) Date of publication of application:
**11.07.79 Bulletin 79/14**

(45) Publication of the grant of the patent:
**21.04.82 Bulletin 82/16**

(84) Designated Contracting States:
**BE DE FR GB IT NL SE**

(56) References cited:
**GB - A - 1 052 871**
**GB - A - 1 239 588**
**GB - A - 1 445 445**

(73) Proprietor: **STAMICARBON B.V.**
**Postbus 10**
**NL-6160 MC Geleen (NL)**

(72) Inventor: **Lemstra, Pieter Jan**
**Walcundusstraat 3**
**NL-6444 TX Brunssum (NL)**
Inventor: **Tuijt, Robert Corstiaan**
**Past. Creusenplantsoen 9**
**NL-6231 EV Meerssen (NL)**
Inventor: **Kremers, Gezinus**
**St. Franciscusstraat 20**
**NL-6129 GN Urmond (NL)**

(74) Representative: **De Boer, Jan et al,**
**OCTROOIBUREAU DSM Postbus 9**
**NL-6160 MA Geleen (NL)**

Courier Press, Leamington Spa, England.

# Process of preparing vinyl chloride polymers by suspension polymerization and polymers so obtained

This invention relates to a process for the suspension polymerization of vinyl chloride, if so desired with one or more copolymerizable monomers, by means of monomer-soluble initiators producing radicals and in the presence of a suspension agent to form vinyl chloride polymers with at least 70% by weight of vinyl chloride units, to provide products that have excellent processing properties.

The suspension polymerization of vinyl chloride, if so desired, with copolymerizable monomers, is widely used on an industrial scale. Liquid vinyl chloride is suspended in water and polymerized at temperatures of between 30° and 80°C with monomer-soluble initiators forming radicals. The polymerization takes place in the monomer droplets. Suitable initiators are lauroyl peroxide, dialkyl percarbonates particularly diisopropyl percarbonate, azo compounds particularly azo-bis-isobutyronitrile, and sulphonyl peroxides particularly acetyl-cyclohexane-sulphonyl peroxide.

Suspension agents are used to promote and stabilize the distribution of monomer or monomers in the aqueous phase and to counteract agglomeration of polymer particles during the polymerization. Usual suspension agents are gelatin, cellulose derivatives, polyvinyl alcohols and polymeric suspension agents based on maleic acid or acrylic acid, e.g. copolymers of maleic acid and vinyl acetate.

It has been found that the particle size, particle-size distribution, porosity, BET surface area, and bulk density of the polymer, especially of polyvinyl chloride, and hence the processing properties, can be influenced by the choice of the suspension agents. A marked influence of the suspension agents used in the polymerization is found particularly in vinyl chloride polymers in which plasticizers are incorporated. To take up plasticizers, the polymer must have sufficient porosity and the BET surface area must be large. The occurrence in the product of so-called fish-eyes, i.e. ungelated particles, will be less with an increase in porosity and BET surface area, and the particle-size distribution is narrower. A narrow particle-size distribution is also of importance in effecting the processability of the polymer.

Due to the harmful properties of vinyl chloride there is a requirement for its removal from the polymer. It is found that vinyl chloride can be removed more easily from the polymer as the porosity and the BET surface area increases.

The determination of the particle size and the particle size distribution is known and is carried out by screening analysis. The results of the screening analysis can be plotted in a graph. According to Rosin and Rammler (Kolloid Zeitschrift *67* (1934) 16—26 and Chem. Ing.

Techn. *24* (1942) 25—31), the particle-size distribution can be represented by the equation

$$\frac{R}{100}=e^{-\left(\frac{x}{\bar{x}}\right)^n}$$

where R stands for the fraction, in % by weight, that is retained on a screen of mesh width x, and $\bar{x}$ stands for the average particle size. After two logarithmic operations, the above equations changes into

$$\log\left(\log\frac{100}{R}\right)=n\log x-n\log\bar{x}+\log(\log c),$$

which equation that when plotted in a log . log . —log . Rosin-Rammler diagram, is represented by a straight line. When $x=\bar{x}$,

$$\frac{100}{R}=e$$

or R=36.8%, i.e. the mesh width of a screen on which 36.8% is retained and through which 63.2% passes, to indicate the average particle size. In practice no mesh width of a standard screen will be exactly equal to these values, but the average particle size is read from the Rosin-Rammler diagram on the line corresponding to R=36.8.

The parameter n, the uniformity factor, is a measure of the width of the particle-size distribution. The greater the value of n, the narrower the particle-size distribution, and a high value of n, e.g. at least 3, and preferably at least 4 and in particular at least 4.5, is highly desirable for vinyl chloride polymers.

General information and references about particle sizes and particle-size distributions are given in Ullman's Encyclopädie der technischen Chemie, 3rd Edition, Volume 2/1 pages 747 ff., and Kirk-Othmer Encyclopedia of Chemical Technology, 2nd Edition, Volume 18, pp. 310—324.

The porosity is determined by the mercury-penetration method. L. A. de Wit and J. J. F. Scholten, J. Cat. *36* 36—47 (1975), give a general explanation of the theory of this method, and Guyer, Böhlen and Guyer, Helv. Chim. Acta *42*, 2103 (1959), describe a device for the measurement of the porosity by this method.

Ullman's Encyclopädie der technischen Chemie, 3rd Edition, Volume 2/1 pages 754 ff., gives a survey of the methods of determining surface areas, e.g. the BEF surface area, based on a publication by Brunauer, Emmet and Teller in J. Am. Chem. Soc. *60* 309 (1938).

High porosity of the polymer is usually accompanied by a low bulk density. At a given porosity however, the bulk density is found to fluctuate. As the bulk density is higher, the processing properties, notably the throughput in extruders, are improved. Consequently attempts are made at preparing vinyl chloride polymers whose bulk density is as high as possible at a given desired porosity.

Because of the influence of the suspension agents on a number of properties of the polymer, the choice of such an agent is particularly important. Modification of the suspension agents is used as a means of improving the properties of the polymers to be prepared. It is also known to use a combination of two or more suspension agents for this purpose e.g. from British Patent 1,445,445.

The term 'polyvinyl alcohols' includes suspension agents prepared by solvolysis of polyvinyl acetate, as polyvinyl alcohol cannot be prepared directly by polymerization of vinyl alcohol, which is tautomeric with acetaldehyde. In an aqueous or alcoholic medium, polyvinyl acetate can be converted into polyvinyl alcohol with an acid or an alkali as a catalyst. Acetic acid is liberated in hydrolysis in an aqueous medium and an acetic ester is liberated in alcoholysis in an alcoholic medium. The term solvolysis includes both conversions. The solvolysis may be effected completely or partially. An incompletely solvolysed polyvinyl acetate can be considered to be a copolymer of vinyl acetate and vinyl alcohol, but is referred to as polyvinyl alcohol in practice, the degree of solvolysis being stated.

Polyvinyl alcohols that are used as suspension agents are soluble in water. The degree of solvolysis is then higher than 70 moles %. Polyvinyl alcohol with a degree of solvolysis of less than 70 moles % is not or very poorly soluble in water, and, when the degree of solvolysis decreases the polyvinyl alcohol approaches insolubility in water.

Polyvinyl alcohols to be used as suspension agents are usually characterized by the degree of polymerization and the degree of solvolysis. The molecular weight is less suitable as a characteristic, because it changes upon solvolysis. In some instances the molecular weight or the degree of polymerization of the polyvinyl acetate to be solvolysed is stated, but these are not suitable standards as chain decomposition always takes place during solvolysis, so that the degree of polymerization of the solvolysed polyvinyl acetate is usually at least 25% lower.

It has recently been proposed to use polyvinyl alcohols with a degree of solvolysis of less than 70 moles % as a secondary suspension agent. These water-insoluble polyvinyl alcohols are used in combination with a water soluble suspension agent. Water soluble suspension agents are referred to as primary suspension agents.

The properties of vinyl chloride polymers are found to be favourably affected if the suspension polymerization of vinyl chloride is effected in the presence of a polyvinyl alcohol with a degree of solvolysis of less than 70 moles % in combination with a water soluble primary suspension agent, preferably a polyvinyl alcohol with a degree of solvolysis of over 70 moles %.

Further improvement of a number of properties however is still to be desired, particularly the reduction of the number of fish eyes, and also a further increase of the BET surface area. The occurrence of fish eyes depends in part on the particle-size distribution of the polymer. It generally holds that the narrower the distribution, the fewer fish eyes that are ascribed to ungelated coarse particles.

It has now been found that vinyl chloride polymers with excellent porosity, a large BET surface area, a narrow particle size distribution, few fish eyes when processed, and excellent plasticizer absorption are obtained by the process of the invention, which provides a process of preparing vinyl chloride polymers by suspension polymerization of vinyl chloride with 0 to 30 moles % of copolymerizable monomers by means of monomer-soluble initiators forming radicals and in the presence of primary and secondary suspension agents using as secondary suspension agent a polyvinyl alcohol with a degree of solvolysis of at most 70 moles %, characterized in that the polymerization is effected in the presence of from 0.005 to 0.5 parts by weight per 100 parts by weight of monomer, of a primary suspension agent, and as a secondary suspension agent, from 0.005 to 0.5 parts by weight per 100 parts by weight of monomer of a polyvinyl alcohol with a degree of solvolysis of 40 to 70 moles % and with a degree of polymerization of at least 250, wherein this polyvinyl alcohol has such a narrow distribution of the degree of solvolysis that a fraction of at least 80% by weight, and preferably 90% by weight, of this polyvinyl alcohol has a degree of solvolysis differing less than 10%, preferably less than 5%, from the average value.

Surprisingly, it has been found that such a narrow distribution of the degree of solvolysis of the polyvinyl alcohol used as a secondary suspension agent brings about a narrow particle size distribution of the vinyl chloride polymer. Distributions of the degree of solvolysis of polyvinyl alcohols are known for instance from the publication by K. Noro in Br. Polym. J. 2 (1970) 128—134 and from British Patent 981,525.

The preparation of polyvinyl alcohols with a narrow distribution of the degree of solvolysis that can be used as thickners in paints to be applied by brush is known from the said British Patent 981,525. According to that method the solvolysis reaction must be allowed to proceed to completion, as termination by neutralization of the catalyst will result in a non homogeneous product. To prepare polyvinyl alcohols with a low degree of solvolysis, a small amount of catalyst will have to be used, with the result, that the solvolysis will proceed slowly. The solvolysis can be made to proceed more quickly by the use of more catalyst and then stopped, and subsequently the product with a wide distribution of the degree of solvolysis can be fractionated with water-alcohol mixtures and a fraction with the desired degree of solvolysis and a narrow distribution of the degree of solvolysis can be used as the secondary suspension agent in the present invention. Use may also be made of polyvinyl alcohols with a degree of solvolysis of 40 to 70 moles% and a narrow distribution of the degree of solvolysis that have been prepared in another way. Use is preferably made of a polyvinyl alcohol prepared by solvolysis of polyvinyl acetate in solvent mixtures consisting of 95—70% by weight of a $C_1$—$C_4$ alcohol and 5—30% by weight of water.

The preparation of polyvinyl alcohols with degrees of solvolysis of less than 70 moles % presents many problems, unlike the preparation of polyvinyl alcohols with degrees of solvolysis of over 70 moles %. The solvolysis is generally effected by dissolving polyvinyl acetate in a lower alcohol and solvolysing at slightly elevated temperatures by means of acid or alkaline catalysts. The viscosity of the solution strongly increases when degrees of solvolysis of 30 to 50 moles % are reached, and a gel is formed at degrees of solvolysis of 50 to 70 moles %. When the degree of solvolysis rises to over 70 moles %, the polyvinyl alcohol can be made to precipitate as a white powder by stirring vigorously and the liquid phase becomes less viscous again. Hence, processing polyvinyl alcohols with degrees of solvolysis of over 70 moles % presents no problem, but the preparation and processing of polyvinyl alcohols with lower degrees of solvolysis in the form of very viscous solutions of gels is difficult. For want of a better method, such viscous solutions or gels are processed by heating them with stirring, to evaporate the solvents, such as alcohols and/or esters. This method is uneconomic since the polyvinyl alcohols bind the solvent tenaciously and the path of diffusion of the solvent molecules is long. Hence, this processing takes considerably more time than the solvolysis. When attempts are made to speed up drying by heating at higher temperatures, decomposition occurs, which entails discoloration and reduction of the solubility.

Another drawback is that non-homogeneous products are obtained. The solvolysis is stopped by neutralization of the catalyst. In very viscous solutions or in gels, the solvolysis cannot or hardly be stopped at the desired value. The neutralizing agent of the catalyst cannot rapidly be mixed homogeneously with the solvolysed reaction product and, consequently, the solvolysis cannot be stopped rapidly to give a homogeneous product. This is the more objectionable as it is in the gel phase that the rate of solvolysis reached its maximum value and is considerably higher than at degrees of solvolysis of less than 40 moles % or higher than 70 moles %. Hence, the resulting polyvinyl alcohol has a wide distribution of the degree of solvolysis.

To prepare these particular polyvinyl alcohols the polyvinyl acetate starting material is dissolved in an alcohol, such as methanol, ethanol, propanol, isopropanol, butanol, isobutanol, but preferably in methanol or ethanol, especially methanol, and water and an alkaline catalyst is then added. Preferably, the catalyst which is typically potassium or sodium hydroxide, is dissolved in the amount of water required for the formation of the solvent mixture, and this solution is mixed with that of the polyvinyl acetate in methanol.

The concentration of the polyvinyl acetate in the solvent mixture may vary within wide limits and is readily determined by the skilled operator. As an example, the maximum concentration that can be used depends on the conditions and on the degree of polymerization of the polyvinyl acetate. As the concentration increases the solutions will be more viscous, but preferably they are not so viscous that they are difficult to process. In most cases, concentrations of up to 20 to 25% by weight can still be used. If the degree of polymerization is lower than 1000, even higher concentrations of up to 50% or more can still be processed very well.

The degree of solvolysis can be controlled by the choice of the starting amount of water relative to the polyvinyl acetate and of the alcohol-water ratio. In the polyvinyl alcohol preparation the rate of solvolysis becomes too low at a given degree of solvolysis. Hence few differences in the degree of solvolysis are caused in the neutralization of the catalyst, even if the neutralization does not proceed homogeneously. A narrow distribution of the degree of solvolysis is still obtained in all cases.

The alcohol in which the solvolysis is effected is preferably methanol or ethanol, especially methanol as indicated above. The amount of water is preferably from 5 to 20 parts by weight of water per 100 parts by weight of alcohol. The solvolysis may be accomplished at temperatures ranging from 0°C. to the boiling point of the system. Preferably the reaction temperature is at least 10°C., and, generally, it is not higher than 50°C.

The catalyst used is alkali-metal hydroxide, e.g., sodium or potassium hydroxide or an alkalimetal alcoholate, e.g., sodium or potassium methylate, in amounts of 0.1 to 2% by weight, and preferably 0.5 to 1% by weight calculated to the weight of polyvinyl acetate. The reaction mixture is properly stirred during the solvolysis as may be required.

When preparing the polyvinyl alcohols, one preferably starts with a polyvinyl acetate having a degree of polymerization of at least 350 and at most 2000. A preferred range is at least 500 and at most 1500. Although this is not restricted to this particular polyvinyl acetate as polyvinyl alcohols having a narrow distribution of the degree of solvolysis are also obtained in the solvolysis of polyvinyl acetate with a degree of polymerization of less than 350 or more than 2000. The above are preferred ranges for the below-described products.

The solvolysis is stopped by adding an acid, such as hydrochloric acid, sulfuric acid or acetic acid, with appropriate stirring. Acetic acid is particularly suitable and may be added as glacial acetic acid, if so desired, diluted with an alcohol, especially methanol.

It is considered possible that the polyvinyl alcohols to be used as a secondary suspension agent according to the invention are forced to occupy the interface between the vinyl chloride monomer and water, as they are insoluble in water and in monomer. Accordingly as the distribution of the degree of solvolysis becomes wider, a larger part is soluble in water (high degree of solvolysis) or in monomer (low degree of solvolysis). If the amount of polyvinyl alcohol with a wide distribution of the degree of solvolysis is sufficiently large, it is possible to have a sufficiently large amount of a water-insoluble and monomer-insoluble fraction, but fractions that are soluble in water or in monomer will also be present. Possibly the monomer soluble fraction interferes with the formation of a good PVC structure, for polyvinyl alcohols with a wide distribution of the degree of solvolysis do not permit of preparing vinylchloride polymers with a narrow particle-size distribution with a uniformity factor according to Rosin-Rammler of at least 4 preferably at least 4.5, as can be effected according to the present invention. The degree of solvolysis of the polyvinyl alcohols to be used according to the invention preferably is between 50 and 60 moles %.

The use of polyvinyl alcohol with a degree of solvolysis of below 70 moles % as a secondary suspension agent in the suspension polymerization of vinyl chloride is known from German Offenlegungsschrift 2653087. These polyvinyl alcohols have been prepared by solvolysis of a polyvinyl acetate with a molecular weight of 10,000 to 30,000, i.e. the degree of polymerization is between 116 and 348, so that the degree of polymerization of the polyvinyl alcohol is not more than 275. The solvolysis is terminated at a saponification number of between 300 and 500. The degree of solvolysis is then between 38 and 70 moles %. Such a preparation is not described in the said German patent specification, which only discloses that the solvolysis can be carried out in methanol, ethanol, acetone, esters or mixtures thereof with both an alkali and an acid as a catalyst.

In the solvolysis in such polar organic solvents or solvent mixtures, the viscosity strongly increases when the degree of solvolysis reaches 30 to 50 moles %, and a gel is formed at a degree of solvolysis of 50 to 70 moles %. Neutralization of the catalyst, which stops the solvolysis, cannot be carried out quickly and homogeneously. This is objectionable as it is in the gel phase that the rate of solvolysis reaches its maximum value, which is considerably higher than at degrees of solvolysis of less than 40 moles % and higher than 70 moles %. The resulting polyvinyl alcohol has a very wide distribution of the degree of solvolysis and, without being fractionated, is less suitable as a secondary suspension agent in the polymerization of vinyl chloride.

German Offenlegungsschrift 2,702,771 specifies polyvinyl alcohols with a degree of polymerization of 60—6000, a degree of solvolysis of 30—65 moles % and a block-wise distribution of the acetate- and hydroxy-groups, which are prepared by solvolysis of polyvinyl acetate with an alkali as a catalyst in a mixture consisting of 50—98% by volume of a nonpolar organic solvent and 50—2% by volume of a polar organic solvent, at least the greater part of which must be an alcohol to enable the solvolysis to take place. This solvolysis takes place in the gel phase, which entails the disadvantages hereinbefore referred to when the solvolysis is stopped at the desired degree of solvolysis, and hence the wide distribution of the degree of solvolysis. There is no disclosure of how the reaction is stopped and how the polyvinyl alcohol obtained in the gel phase is processed.

The polyvinyl alcohols to be used according to the present invention have substantially no complete, block structure. The intramolecular distribution of the acetate- and hydroxy groups can be determined by means of $^{13}C$-nuclear-spin resonance spectrometry which permits of distinguishing acetate groups with two adjacent hydroxy groups from those with one adjacent hydroxy group and one adjacent acetate group or two adjacent acetate groups. The former are called lone acetate groups and can be considered a measure of the block structure. As the number of lone acetate groups increases, the number of acetate groups bound into groups of two or more will decrease. The absence of lone acetate groups points to a complete block structure.

The degree of polymerization of the polyvinyl alcohols to be used as secondary suspension agents is preferably not more than 1250 and particularly not more than 800. The intramolecular distribution is preferably such that the number of lone acetate groups determined by $^{13}C$-nuclear-spin-resonance spectrometry is at least 3% of the total number of acetate groups.

Besides the present polyvinyl alcohols, primary suspension agents known in themselves are used, e.g. gelatin, cellulose derivatives, polymeric suspension agents and, preferably, polyvinyl alcohols with degrees of solvolysis of over 70 moles %.

The following Examples of the invention are provided.

Example 1

26.0 kg of vinyl chloride, 36.4 kg of water, 26.0 g (0.1% by weight based on monomer) of a water-soluble polyvinyl alcohol prepared by methanolysis of polyvinyl acetate with a molecular weight of 165,000 to a degree of solvolysis of 82 moles % are placed in a 100 litre enamelled autoclave, which is then closed. The reactor contents are heated to 57.5°C with stirring and the temperature is maintained at this value until the pressure in the autoclave, which is 9.5 atmospheres, has fallen to 8.0 atmospheres, after which the pressure is released and the polymerization is stopped. The conversion amounts to 88—90%. The polyvinyl chloride is separated from the suspension and dried.

The following quantities are determined: The bulk density in g/cm³, the porosity in cm³/g by the mercury penetration method at a pressure of 120 kg/cm², the BET surface area in m²/g, the maximum absorption of dioctyl phthalate (DOP) in cm³ of DOP per 100 g of PVC the particle-size distribution and the average particle size, and the number of fish eyes.

The number of fish eyes is determined by gelating a composition of 100 parts by weight of PVC and 50 parts by weight of dioctyl phthalate on a roller at 150°C, mixing it for another 7 minutes after the gelation and processing it into a 0.1 mm film. The number of dots per 100 cm² is counted and stated as the number of fish eyes.

The results are set forth in the accompanying Table.

Examples 2 to 5

In the same way as in Example 1, vinyl chloride is polymerized, while the following secondary suspension agents are used in addition to 0.08% by weight, based on monomer, of the polyvinyl alcohol used in Example 1:

2) 0.08% by weight, based on monomer, of a polyvinyl alcohol prepared from a polyvinyl acetate with a molecular weight of 125,000 with a degree of solvolysis of 55 moles % and with a narrow distribution of the degree of hydrolysis, i.e. over 80% has a degree of solvolysis of between 45 and 65 moles %.

3) 0.08% by weight, based on monomer, of a polyvinyl alcohol prepared from a polyvinyl acetate with a molecular weight of 50,000, with a degree of solvolysis of 55 moles % and with a narrow distribution of the degree of hydrolysis, i.e. over 80% by weight has a degree of solvolysis of between 45 and 65 moles %.

4) 0.08% by weight, based on monomer, of a polyvinyl alcohol prepared from a polyvinyl acetate with a molecular weight of 125,000, with a degree of solvolysis of 25 moles %.

5) 0.08% by weight of a commercial polyvinyl alcohol with a degree of polymerization of 200 obtained under the Trade Mark Polivic S-202. The degree of solvolysis is 48% and the distribution of the degree of solvolysis is wide.

The properties of the PVC prepared according to Examples 2—5 are set forth in Table 1.

Examples 2 and 3 are in accordance with the invention. Examples 1, 4 and 5 are comparative examples, Example 1 is carried out with a primary suspension agent only, Example 4 is carried out with a polyvinyl alcohol with a very low degree of solvolysis outside the range of the invention, and Example 5 employs a polyvinyl alcohol with too low a degree of polymerization and a wide distribution of the degree of solvolysis. In Example 1 a rather coarse polyvinyl chloride is obtained having a similar bulk density to those in Examples 2 and 3 according to the invention, but a lower porosity, a small BET surface area, and a large number of fish eyes. In Example 4, a polyvinyl chloride with a slightly higher bulk density than in Examples 2 and 3 is obtained. The porosity and the BET surface area are lower, and the number of fish eyes is markedly higher than in Examples 2 and 3. The polyvinyl chloride obtained in Example 5 has a bulk density and a porosity that are only slightly different from those in Examples 2 and 3. However, the BET surface area is distinctly smaller and the number of fish eyes is clearly higher. The particle-size distribution appears to be quite narrow in Example 5, and is particularly excellent in Example 3.

The following Experiments describe the preparation of a specific polyvinyl alcohol having a degree of solvolysis of 40 to 70 moles % and a narrow distribution of that degree of solvolysis.

Experiments 6 to 9

Polyvinyl acetate (100 parts by weight) having a degree of polymerization dP=600 was dissolved in methanol with gentle heating in a double-walled reactor. Potassium hydroxide (0.8% by weight, calculated to the quantity of polyvinyl acetate) in a water solution was added and the resulting solution was kept at 40°C. The solvolysis was stopped after 1, 2, and 3 hours, respectively, by adding an amount of acetic acid equivalent to the amount of potassium hydroxide. The amounts of methanol and water are stated in the Table 2, as are the degrees of solvolysis. Experiment 6 shows that the solvolysis increases by another 7% in the second hour with 2.5 parts by weight of water per 100 parts by weight of methanol. It appears from Experiment 7 that the solvolysis stops at about 50%. The solvolysis was found to stop sooner when more water was added, as in Experiment 8, and to stop later when more methanol was added, as in Experiment 9.

The viscosity of the solvolysis products at 20°C. was less than 100 cP in all cases, so that the neutralization of the catalyst could easily be effected rapidly and homogeneously, so that polyvinyl alcohol having a narrow distribution of the degree of solvolysis was obtained.

Table 1

| Example | Bulk density g/cm³ | Porosity cm³/g | B.E.T. m²/g | Plasticizer absorption | Fish eyes/ 100 cm² | $\overline{d}$ | $n_{RRS}$ |
|---|---|---|---|---|---|---|---|
| 1) | 0.48 | 0.20 | 1.0 | 98 | 122 | 240 | 4.7 |
| 2) | 0.49 | 0.29 | 1.3 | 90 | 5 | 155 | 4.5 |
| 3) | 0.48 | 0.33 | 1.5 | 96 | 1 | 135 | 5.8 |
| 4) | 0.51 | 0.25 | 1.1 | 87 | 9 | 180 | 4.7 |
| 5) | 0.47 | 0.31 | 1.1 | 90 | 9 | 110 | 3.6 |

$\overline{d}$=average particle size in $\mu$m
$n_{RRS}$=uniformity factor according to Rosins and Rammler.

Table 2

| Experiment | PVAc* | MeOH* | H₂O* | KOH** | Degree of Solvolysis in Moles % 1 h | 2 h | 3 h |
|---|---|---|---|---|---|---|---|
| 6 | 100 | 200 | 5 | 0.8 | 60 | 67 | 70 |
| 7 | 100 | 200 | 10 | 0.8 | 49 | 50 | 51 |
| 8 | 100 | 200 | 20 | 0.8 | 41 | 42 | 43 |
| 9 | 100 | 250 | 10 | 0.8 | 58 | 60 | 62 |

*Parts by weight
**% by weight relative to the polyvinyl acetate

## Claims

1. A process of preparing vinyl chloride polymers by suspension polymerization of vinyl chloride with 0 to 30 moles % of copolymerizable monomers by means of monomer-soluble initiators forming radicals and in the presence of primary and secondary suspension agents using as secondary suspension agent a polyvinyl alcohol with a degree of solvolysis of at most 70 moles %, characterized in that the polymerization is effected in the presence of from 0.005 to 0.5 parts by weight per 100 parts by weight of monomer, of a primary suspension agent, and as a secondary suspension agent, from 0.005 to 0.5 parts by weight per 100 parts by weight of monomer of a polyvinyl alcohol with a degree of solvolysis of 40 to 70 moles % and with a degree of polymerization of at least 250, wherein this polyvinyl alcohol has such a narrow distribution of the degree of solvolysis that a fraction of at least 80% by weight of this polyvinyl alcohol has a degree of solvolysis differing less than 10% from the average value.

2. A process according to Claim 1, wherein the said polyvinyl alcohol has a degree of polymerization of at least 350.

3. A process according to Claim 1 or Claim 2, wherein the said polyvinyl alcohol has a degree of solvolysis of from 50 to 60 moles %.

4. A process according any of Claims 1—3, wherein the said polyvinyl alcohol has a fraction of at least 90% by weight which has a degree of solvolysis differing less than 10% from the average.

5. A process according to any of Claims 1—3, wherein the said polyvinyl alcohol has a fraction of at least 80% by weight that has a degree of solvolysis differing less than 5% from the average.

6. A process according to Claim 4 or Claim 5, wherein the said polyvinyl alcohol has a fraction of at least 90% by weight that has a degree of solvolysis differing less than 5% from the average.

7. A process according to any of Claims 1 to 6 wherein the said polyvinyl alcohol has been prepared by solvolysis of polyvinylacetate in solvent mixtures consisting of 95—70% by weight of a $C_1$—$C_4$ alcohol and 5—30% by weight of water.

8. A process according to Claim 7 wherein the said polyvinyl alcohol has been prepared by solvolysis of a polyvinylacetate having a degree of polymerization of at least 350 and at most 2000.

9. A process according to any of Claims 1 to 8, wherein the said primary suspension agent is a polyvinyl alcohol with a degree of solvolysis higher than 70 moles%.

## Patentansprüche

1. Verfahren zu Herstellung von Vinylchloridpolymeren durch Suspensionspolymerisation von Vinylchlorid mit 0 bis 30 Mol-% copolymerisierbarere Monomere mit Hilfe von Radikale bildenden monomerlöslichen Initiatoren und in Gegenwart von primären und sekundären Suspensionsmitteln, wobei als sekundäres Suspensionsmittel ein Polyvinylalkohol mit einem maximalen Solvolysegrad von 70 Mol-% verwendet wird, dadurch gekennzeichnet, dass die Polymerisation durchgeführt wird in Gegenwart von 0,005 bis 0,5 Gewichtsteilen je 100 Monomer-Gewichtsteile eines primären Suspensionsmittels und als sekundäres Suspensionsmittel 0,005 bis 0,5 Gewichtsteile je 100 Monomer-Gewichtsteile eines Polyvinylalkohols mit einem Solvolysegrad von 40 bis 70 Mol-% und mit einem Polymerisationsgrad von mindestens 250, worin dieser Polyvinylalkohol

eine derart enge Verteilung des Solvolysegrades aufweist, dass eine Fraktion von mindestens 80 gew.-% dieses Polyvinylalkohols einen Solvolysegrad hat, der weniger als 10 10% vom Durchsnittswert abweicht.

2. Verfahren nach Anspruch 1, dadurch gekennzeichnet, dass der genannte Polyvinylalkohol einen Polymerizationsgrad von mindestens 350 aufweist.

3. Verfahren nach Anspruch 1 oder 2, dadurch gekennzeichnet, dass der genannte Polyvinylalkohol einen Solvolysegrad von 50 bis 60 Mol-% hat.

4. Verfahren nach einem der Ansprüche 1 bis 3, dadurch gekennzeichnet, dass der genannte Polyvinylalkohol eine Fraktion von mindestens 90 Gew.-% hat, deren Solvolysegrad weniger als 10% vom Durchschnittswert abweicht.

5. Verfahren nach einem der Ansprüche 1 bis 3, dadurch gekennzeichnet, dass der genannte Polyvinylalkohol eine Fraktion von mindestens 80 gew.-% hat, deren Solvolysegrad weniger als 5% vom Durchschnittswert abweicht.

6. Verfahren nach einem der Ansprüche 4 oder 5, dadurch gekennzeichnet, dass der genannte Polyvinylalkohol eine Fraktion von mindestens 90 Gew.-% hat, deren Solvolysegrad weniger als 5% vom Durchschnittswert abweicht.

7. Verfahren nach einem der Ansprüche 1 bis 6, dadurch gekennzeichnet, dass der genannte Polyvinylalkohol hergestellt wurde durch Solvolyse von Polyvinylacetat in Lösungsmittelgemischen, bestehend aus 95—70 Gew.-% eines $C_1$—$C_4$-Alkohols und 5—30 Gew.-% Wasser.

8. Verfahren nach Anspruch 7, dadurch gekennzeichnet, dass der genannte Polyvinylalkohol hergestellt wurde durch Solvolyse eines Polyvinylacetats mit einem Polymerisationsgrad von mindestens 350 und höchstens 2000.

9. Verfahren nach einem der Ansprüche 1 bis 8, dadurch gekennzeichnet, dass das primäre Suspensionsmittel eine Polyvinylalkohol mit einem Solvolysegrad über 70 Mol-% ist.

**Revendications**

1. Procédé de préparation de polymères de chlorure de vinyle, en polymérisant en suspension du chlorure de vinyle avec 0 à 30 moles % de monomères copolymérisables à l'aide d'initiateurs solubles dans du monomère et produisant des radicaux, en présence d'agents de suspension primaires et secondaires, en utilisant, comme agent de suspension secondaire, un alcool polyvinylique avec un degré de solvolyse de tout au plus 70 moles %, caractérisé en ce que la polymérisation est effectuée en présence de 0,005 à 0,5 partie en poids par 100 parties en poids de monomère d'un agent de suspension primaire et, comme agent de suspension secondaire, 0,005 à 0,5 partie en poids par 100 parties en poids de monomère d'un alcool polyvinylique avec un degré de solvolyse de 40 à 70 moles % et avec un degré de polymérisation d'au moins 250, alors que l'alcool polyvinylique a une répartition tellement étroite des degré de solvolyse qu'une fraction d'au moins 80% en poids de cet alcool polyvinylique ait un degré de solvolyse qui diffère de moins de 10% de la valeur moyenne.

2. Procédé selon la revendication 1, dans lequel ledit alcool polyvinlique a un degré de polymérisation d'au moins 350.

3. Procédé selon l'une des revendications 1 à 2, dans lequel ledit alcool polyvinylique a un degré de solvolyse de 50 à 60 moles %.

4. Procédé selon l'une des revendications 1 à 3, dans lequel ledit alcool polyvinylique possède une fraction d'au moins 90% en poids qui a un degré de solvolyse différant de moins de 10% de la valeur moyenne.

5. Procédé selon l'une des revendications 1 à 3, dans lequel ledit alcool polyvinylique possède une fraction d'eau moins 80% en poids qui a un degré de solvolyse différant de moins de 5% de la valeur moyenne.

6. Procédé selon l'une des revendications 4 et 5, dans lequel ledit alcool polyvinylique possède une fraction d'au moins 90% en poids qui a un degré de solvolyse différant de moins de 5% de la valeur moyenne.

7. Procédé selon l'une des revendications 1 à 6, dans lequel ledit alcool polyvinylique est préparé en solvolysant de l'acétate de polyvinyle dans des mélanges de solvants, composés de 95—70% en poids d'un alcool $C_1$—$C_4$ et de 5—30% en poids d'eau.

8. Procédé selon la revendication 7, dans lequel ledit alcool polyvinylique est préparé en solvolysant de l'acétate de polyvinyle qui a un degré de polymérisation d'au moins 350 et de tout au plus 2000.

9. Procédé selon l'une des revendications 1 à 8, dans lequel ledit agent de suspension primaire est un alcool polyvinylique avec un degré de solvolyse supérieur à 70 moles %.